# EUROPÄISCHE PATENTSCHRIFT

(11) **EP 3 879 189 B1**
(45) Veröffentlichungstag und Bekanntmachung des Hinweises auf die Patenterteilung: **13.05.2026**
(21) Anmeldenummer: 21159975.8
(22) Anmeldetag: 01.03.2021
(51) Int. Cl.: F24D 19/10

(54) **HEIZUNGSANLAGE**
HEATING SYSTEM
INSTALLATION DE CHAUFFAGE

(30) Priorität: 13.03.2020 AT 502162020
(43) Veröffentlichungstag der Anmeldung: 15.09.2021
(73) Patentinhaber: HARGASSNER Ges mbH, 4952 Weng im Innkreis (AT)
(72) Erfinder: Hargassner, Markus, 4952 Weng im Innkreis (AT)
(74) Vertreter: Hübscher & Partner Patentanwälte GmbH

(56) Entgegenhaltungen:
- EP-A2- 0 681 148
- EP-A2- 2 275 748
- DE-A1- 102009 007 053

## Beschreibung

Die Erfindung bezieht sich auf eine Heizungsanlage mit einem an eine Wärmequelle und an einen Verbraucher angeschlossenen, eine Kreislaufpumpe aufweisenden Wärmekreis, dessen Vorlauf und dessen Rücklauf durch einen Bypass miteinander verbunden sind, und mit einer Steuereinrichtung zum Ansteuern der Kreislaufpumpe in Abhängigkeit von der Wärmekreistemperatur.

Aus der EP2 275 748 A2 ist eine Heizungsanlage bekannt, die einen Heizkessel und einen über einen Vor- und Rücklauf an den Heizkessel angeschlossenen Wärmespeicher aufweist. Zum Laden des Wärmespeichers ist eine Ladepumpe im Rücklauf vorgesehen, deren Drehzahl bzw. Leistung in Abhängigkeit von der Vorlauftemperatur gesteuert werden kann. Um den Heizkessel im Betriebsoptimum zu betreiben, ist für eine Rücklauftemperatur in einem vorgegebenen Bereich zu sorgen. Zur Temperatursteuerung wird der Rücklauf über einen Bypass an den Vorlauf angeschlossen, damit im Bedarfsfall erwärmter Wärmeträger dem Rücklauf aus dem Vorlauf zugeführt werden kann. Zu diesem Zweck ist der Bypass mithilfe eines Dreiwege-Ventils an den Rücklauf angeschlossen. Das Dreiwege-Ventil wird in Abhängigkeit von der Rücklauftemperatur angesteuert. Im Rücklauf ist dem Dreiwege-Ventil außerdem ein Differenzdruck-Regelventil nachgeordnet, das für einen konstanten, vom Durchfluss möglichst unabhängigen Druckabfall sorgt, jedoch keinen Einfluss auf die Steuerung des Bypasses hat. Nachteilig ist der durch das Dreiwege-Ventil und seine Steuerung bedingte Konstruktionsaufwand.

Bei einem Heizkreis mit an einen Vorlauf und einen Rücklauf angeschlossenen, parallelgeschalteten Heizkörpern ist es bekannt (DE 10 2009 007 053 A1), den Vorlauf mit dem Rücklauf über ein druckgeregeltes Überströmventil zu verbinden, um zwischen dem Vorlauf und dem Rücklauf eine Druckdifferenz und damit einen entsprechenden Durchfluss durch die Heizkörper zu sichern.

Um den durch einen Heizkreis strömenden Massestrom in Abhängigkeit vom Wärmebedarf des Heizkreises zu regeln, wird nach der EP 0 681 148 A2 unter anderem vorgeschlagen, im Bypass zwischen dem Heizungsvor- und -rücklauf ein druckbeaufschlagtes Schaltventil vorzusehen, das beim Überschreiten eines Mindestdifferenzdrucks öffnet, sodass ein Temperaturfühler im Rücklaufbereich des Bypasses mit heißem Wärmeträger aus dem Vorlauf beaufschlagt wird. Die dadurch bedingte Temperaturdifferenz zwischen der durch den Temperaturfühler im Bypassbereich erfassten Temperatur und der durch einen Temperaturfühler erfassten Rücklauftemperatur vor dem Bypass wird dazu genützt, den Massestrom des Vorlaufs mithilfe eines Steuerventils zu drosseln. Es wird somit der Massestrom durch den Heizkreis, nicht aber eine Wärmekreistemperatur gesteuert.

Der Erfindung liegt somit die Aufgabe zugrunde, eine Heizungsanlage der in Rede stehenden Art so auszubilden, dass mit vergleichsweise einfachen konstruktiven Mitteln eine vorteilhafte Steuerung der Wärmekreistemperatur ermöglicht wird.

Ausgehend von einer Heizungsanlage der eingangs geschilderten Art löst die Erfindung die gestellte Aufgabe dadurch, dass der Wärmekreis ein bei einer anliegenden Mindestdruckdifferenz öffnendes Schaltventil aufweist, das mithilfe der Kreislaufpumpe mit einer Druckdifferenz beaufschlagbar ist, die in Abhängigkeit von der Wärmekreistemperatur über oder unter der Mindestdruckdifferenz liegt.

Zufolge dieser Maßnahmen reicht eine Steuerung der Kreislaufpumpe aus, um die Wärmekreistemperatur in einem gewünschten Bereich zu halten, weil das im Wärmekreis angeordnete Schaltventil aufgrund der anliegenden, durch die Kreislaufpumpe bedingten Druckdifferenz in Abhängigkeit von der Wärmekreistemperatur schaltet. Beim Überschreiten der Mindestdruckdifferenz öffnet das Schaltventil, sodass der Wärmeverbraucher in den Wärmekreis eingebunden wird. Unterschreitet die Druckdifferenz den vorgegebenen Mindestwert, so schließt das Schaltventil mit der Wirkung, dass der Wärmeträger über den Bypass strömt. Durch ein entsprechendes Öffnen und Schließen des Schaltventils kann somit Einfluss auf die Wärmekreistemperatur genommen werden, und zwar ohne das Vorsehen eines den Bypass steuernden Dreiwege-Ventils. Es wird ja lediglich die Drehzahl beziehungsweise Leistung der Kreislaufpumpe über die Steuereinrichtung in Abhängigkeit von der Wärmekreistemperatur gesteuert.

Ist als Wärmequelle ein Heizkessel vorgesehen, so wird üblicherweise mithilfe des Bypasses die Rücklauftemperatur an die jeweiligen Anforderungen des Heizkessels angepasst. In diesem Fall wird das Schaltventil stromaufwärts des Bypasses im Rücklauf angeordnet, wobei die Steuereinrichtung die stromabwärts des Bypasses im Rücklauf vorgesehene Kreislaufpumpe in Abhängigkeit von der Rücklauftemperatur ansteuert. Wird das Schaltventil bedingt durch die Ansteuerung durch die Kreislaufpumpe mit einer Druckdifferenz oberhalb der Mindestdruckdifferenz beaufschlagt, so wird der Verbraucher, beispielsweise ein Wärmespeicher über den Rücklauf mit dem Heizkessel verbunden, wobei aufgrund der Strömungsbedingungen im Wesentlichen kein Wärmeträger über den Bypass vom Vorlauf zum Rücklauf strömt. Soll die Rücklauftemperatur angehoben werden, beispielsweise beim Anfahren des Heizkessels, wird aufgrund der Ansteuerung der Kreislaufpumpe in Abhängigkeit von der Rücklauftemperatur das Schaltventil mit einer die Mindestdruckdifferenz unterschreitenden Druckdifferenz beaufschlagt, sodass der Vorlauf und der Rücklauf über den Bypass mit der Wirkung kurzgeschlossen werden, dass die Rücklauftemperatur angehoben wird.

Soll beispielsweise ein an eine nicht steuerbare Wärmequelle angeschlossener Verbraucher mit einem hinsichtlich der Vorlauftemperatur steuerbaren Wärmeträger versorgt werden, so muss das in Abhängigkeit von der anliegenden Druckdifferenz schaltende Schaltventil stromabwärts des Bypasses vorgesehen sein. Die Steuereinrichtung muss dann die im Wärmekreisabschnitt auf der dem Verbraucher zugekehrten Seite des Bypasses vorgesehene Kreislaufpumpe in Abhängigkeit von der Vorlauftemperatur ansteuern. Mit dem Schließen des Schaltventils wird somit der Wärmeträger vom Verbraucher dem Vorlauf zugeführt, was mit einer entsprechenden Absenkung der Vorlauftemperatur einhergeht.

Aufgrund der Strömungsverhältnisse bei geöffnetem Schaltventil kann eine allfällige Restströmung zwischen dem Vorlauf und dem Rücklauf über den Bypass in Kauf genommen werden. Soll eine solche Restströmung unterbunden werden, kann der Bypass ein bei einer anliegenden Mindestdruckdifferenz schließendes Schaltventil aufweisen. Dieses Schaltventil verhält sich demnach umgekehrt zum Schaltventil im Wärmekreis und schließt den Bypass, wenn der Verbraucher durch die Wärmequelle beaufschlagt wird.

Wird eine drehzahlgesteuerte Kreislaufpumpe eingesetzt, so kann diese Pumpe auch mit kleinen Drehzahlen betrieben werden, was im Falle einer Anhebung der Rücklauftemperatur eines Heizkessels zur Sicherstellung eines entsprechenden Kesselkreislaufes über den Bypass erforderlich ist, um ein lokales Sieden des Wärmeträgers im Kesselbereich zu vermeiden.

Um das abwechselnde Öffnen und Schließen des im Wärmekreis vorgesehenen Schaltventils über die Drehzahl bzw. Leistung der Kreislaufpumpe einfach steuern zu können, kann die Kreislaufpumpe vorteilhaft im Sinne einer Pulsweitenmodulation angesteuert werden. Bei einer Pulsweitenmodulation wird die Kreislaufpumpe zwischen zwei Betriebszuständen umgeschaltet, wobei das Taktverhältnis und die Taktdauer eingestellt werden können. Da der eine Betriebszustand durch eine geringe Drehzahl bzw. Leistung und der andere Betriebszustand durch eine entsprechend höhere Drehzahl bzw. Leistung gekennzeichnet sind und die Kreislaufpumpe zwischen diesen Betriebszuständen pulsartig umgeschaltet wird, kann durch eine Pulsweitenmodulation das die Wärmekreistemperatur steuernde Mischungsverhältnis zwischen Vorlauf und Rücklauf vorgegeben werden.

In der Zeichnung ist der Erfindungsgegenstand beispielsweise dargestellt. Es zeigen
- Fig. 1: eine erfindungsgemäße Heizungsanlage in einem schematischen Blockschaltbild,
- Fig. 2: eine der Fig. 1 entsprechende Darstellung einer Ausführungsvariante einer erfindungsgemäßen Heizungsanlage und
- Fig. 3: den zeitlichen Leistungsverlauf einer als Pulsweitenmodulations-Pumpe ausgebildeten Kreislaufpumpe.

Eine erfindungsgemäße Heizungsanlage weist eine Wärmequelle 1 auf, die über einen Vorlauf 2 und einen Rücklauf 3 mit einem Verbraucher 4 strömungsverbunden ist. Zwischen dem Vorlauf 2 und dem Rücklauf 3 ist ein Bypass 5 vorgesehen, der den mit einer Kreislaufpumpe 6 versehenen Wärmekreis in einen der Wärmequelle 1 zugeordneten Wärmekreisabschnitt 7 und einen dem Verbraucher 4 zugehörigen Wärmekreisabschnitt 8 unterteilt. Vorzugsweise wird im Rücklauf 3 ein Schaltventil 9 vorgesehen, das in Abhängigkeit von der anliegenden Druckdifferenz zwischen einem geschlossenen und einem offenen Schaltzustand umschaltet. Die für das Öffnen vorgegebene Mindestdruckdifferenz wird vorzugsweise durch eine Feder bestimmt, sodass durch eine Änderung der Federvorspannung auch der für das Schalten vorgegebene Schwellwert der Druckdifferenz angepasst werden kann.

Die Kreislaufpumpe 6 wird von einer Steuereinrichtung 10 angesteuert, und zwar in Abhängigkeit von der mittels eines Temperatursensors 11 erfassten Temperatur des Wärmeträgers.

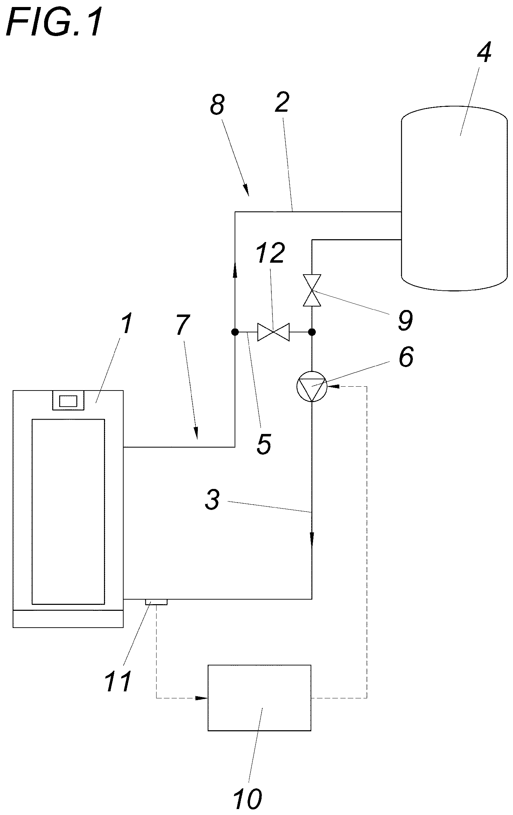

Gemäß der Ausführungsform nach der Fig. 1 ist das Schaltventil 9 stromaufwärts des Bypasses 5 angeordnet, während sich die Kreislaufpumpe 6 stromabwärts des Bypasses 5 befindet. Die Steuereinrichtung 10 wird über den Temperatursensor 11 mit der Rücklauftemperatur beaufschlagt. Soll die Rücklauftemperatur angehoben werden, so wird das Schaltventil 9 durch eine entsprechende Ansteuerung der Kreislaufpumpe 6 über die Steuereinrichtung 10 geschlossen, weil die am Schaltventil 9 anliegende Druckdifferenz aufgrund der verminderten Pumpenleistung unterhalb der eingestellten Mindestdruckdifferenz abgesenkt wird. Dies bedeutet, dass der Wärmeträger innerhalb des Wärmekreisabschnitts 7 umläuft, was zu einer Anhebung der Rücklauftemperatur führt. Mit dem Öffnen des Schaltventils 9 ändern sich die Strömungsverhältnisse, sodass der Wärmeträgerstrom über den Bypass 5 unterbrochen wird.

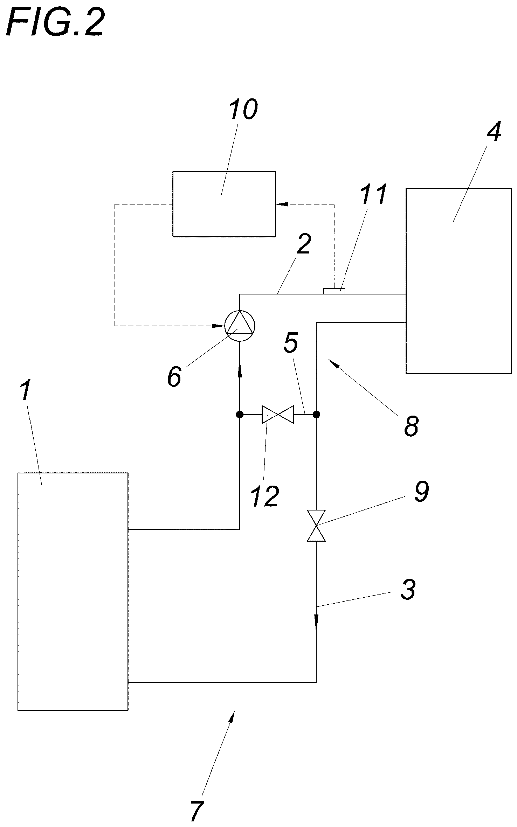

Die Ausführungsform gemäß der Fig. 2 unterscheidet sich im Wesentlichen dadurch, dass die Kreislaufpumpe 6 im Wärmekreisabschnitt 8 vorgesehen ist und in Abhängigkeit von der Vorlauftemperatur über die Steuereinrichtung 10 angesteuert wird. Das Schaltventil 9 befindet sich stromabwärts des Bypasses 5. Wird somit das Schaltventil 9 geschlossen, so strömt der Wärmeträger über den Bypass 5 durch den Wärmekreisabschnitt 8, wobei die Vorlauftemperatur aufgrund der Verbindung des Rücklaufs 3 mit dem Vorlauf 2 abgesenkt wird. Diese Schaltung des Wärmekreises kann insbesondere in den Fällen vorteilhaft eingesetzt werden, in denen eine nicht der nur unzureichend steuerbare Wärmequelle 1 zur Verfügung steht und der Verbraucher 4 mit einer an die Verbraucherverhältnisse angepassten Wärmeträgertemperatur beaufschlagt werden soll, wie dies beispielsweise bei einer an einen Wärmespeicher angeschlossenen Fußbodenheizung gegeben ist.

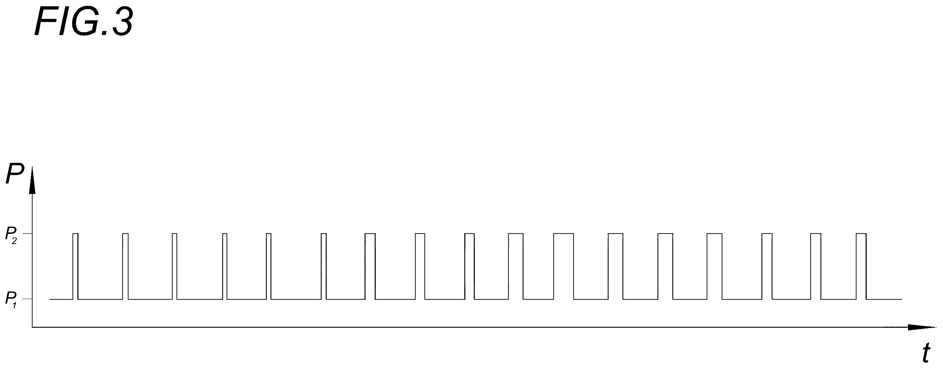

Die Kreislaufpumpe 6 wird vorteilhaft drehzahlgesteuert und kann gemäß der Fig. 3 zwischen zwei Leistungsstufen P1 und P2 mit unterschiedlichen Drehzahlen pulsartig umgeschaltet werden. Die durch die Leistungsstufe P1 bedingte, am Schaltventil 9 anliegende Druckdifferenz liegt unterhalb der Mindestdruckdifferenz dieses Schaltventils 9, sodass das Schaltventil 9 nur im Betriebszustand P2 öffnet, der eine Druckdifferenz am Schaltventil 9 über der Mindestdruckdifferenz bedingt. Wie dem zeitlichen Leistungsverlauf der Fig. 3 entnommen werden kann, können durch eine Pulsweitenmodulation die Öffnungs- und Schließzeiten des Schaltventils 9 so aufeinander abgestimmt werden, dass sich ein bestimmtes Mischungsverhältnis zwischen dem Wärmeträger im Vorlauf 2 und im Rücklauf 3 ergibt. Über die Steuerung der Pulsweite in Abhängigkeit von der durch den Temperatursensor 11 erfassten Ist-Temperatur im Rücklauf 3 bzw. im Vorlauf 2 kann somit die Ist-Temperatur entsprechend einer vorgegebene Soll-Temperatur über die Steuereinrichtung 10 durch die Steuerung der Kreislaufpumpe 6 nachgeführt werden, ohne eine aufwendige Steuerung des Bypasses 5 mithilfe eines Dreiwege-Ventils vorsehen zu müssen.

Um bei offenem Schaltventil 9 eine allfällige Restströmung zwischen dem Vorlauf 2 und dem Rücklauf 3 über den Bypass 5 zu unterbinden, kann im Bypass 5 ein Schaltventil 12 vorgesehen werden, das zum Unterschied zum Schaltventil 9 beim Überschreiten einer anliegenden Mindestdruckdifferenz schließt. Da die am Schaltventil 12 anliegende Druckdifferenz wiederum vom Betriebszustand der Kreislaufpumpe 6 abhängt, wird auch dieses Schaltventil 12 über die Kreislaufpumpe 6 gesteuert.

Um die volle Leistung der Wärmequelle 1 an den Verbraucher 4 abgeben zu können, kann die Drehzahl der Kreislaufpumpe 6 über die Leistungsstufe 2 hinaus erhöht werden.

## Patentansprüche

1. Heizungsanlage mit einer Wärmequelle (1), mit einem Verbraucher (4) und mit einem an die Wärmequelle (1) und an den Verbraucher (4) angeschlossenen, eine Kreislaufpumpe (6) aufweisenden Wärmekreis, dessen Vorlauf (2) und dessen Rücklauf (3) durch einen Bypass (5) miteinander verbunden sind, und mit einer Steuereinrichtung (10) zum Ansteuern der Kreislaufpumpe (6) in Abhängigkeit von der Wärmekreistemperatur, wobei der Wärmekreis ein Ventil (9) aufweist, **dadurch gekennzeichnet, dass** das Ventil (9) ein bei einer anliegenden Mindestdruckdifferenz öffnendes Schaltventil (9) ist, das mithilfe der Kreislaufpumpe (6) mit einer Druckdifferenz beaufschlagbar ist, die in Abhängigkeit von der Wärmekreistemperatur über oder unter der Mindestdruckdifferenz liegt.

2. Heizungsanlage nach Anspruch 1, **dadurch gekennzeichnet, dass** das Schaltventil (9) stromaufwärts des Bypasses (5) im Rücklauf (3) angeordnet ist und dass die Steuereinrichtung (10) die stromabwärts des Bypasses (5) im Rücklauf (3) vorgesehene Kreislaufpumpe (6) in Abhängigkeit von der Rücklauftemperatur ansteuert.

3. Heizungsanlage nach Anspruch 1, **dadurch gekennzeichnet, dass** das Schaltventil (9) stromabwärts des Bypasses (5) im Rücklauf (3) angeordnet ist und dass die Steuereinrichtung (10) die im Wärmekreisabschnitt (8) auf der dem Verbraucher (4) zugekehrten Seite des Bypasses (5) vorgesehene Kreislaufpumpe (6) in Abhängigkeit von der Vorlauftemperatur ansteuert.

4. Heizungsanlage nach einem der Ansprüche 1 bis 3, **dadurch gekennzeichnet, dass** der Bypass (5) ein bei einer anliegenden Mindestdruckdifferenz schließendes Schaltventil (12) aufweist.

5. Heizungsanlage nach einem der Ansprüche 1 bis 4, **dadurch gekennzeichnet, dass** die Drehzahl der Kreislaufpumpe (6) steuerbar ist.

## Claims

1. Heating system comprising a heat source (1), a consumer (4), and a heating circuit connected to the heat source (1) and to the consumer (4), having a circulation pump (6), the flow line (2) and the return line (3) of which heating circuit being connected to one another by a bypass (5), and comprising a control device (10) for actuating the circulation pump (6) as a function of the heating circuit temperature, wherein the heating circuit has a valve (9), **characterized in that** the valve (9) is a switching valve (9) opening at an applied minimum pressure difference, which can be subjected, with the aid of the circulation pump (6), to a pressure difference which lies above or below the minimum pressure difference as a function of the heating circuit temperature.

2. Heating system according to claim 1, **characterized in that** the switching valve (9) is arranged in the return line (3) upstream of the bypass (5), and **in that** the control device (10) actuates the circulation pump (6), provided in the return line (3) downstream of the bypass (5), as a function of the return line temperature.

3. Heating system according to claim 1, **characterized in that** the switching valve (9) is arranged in the return line (3) downstream of the bypass (5), and **in that** the control device (10) actuates the circulation pump (6), provided in the heating circuit section (8) on the side of the bypass (5) facing the consumer (4), as a function of the flow line temperature.

4. Heating system according to one of claims 1 to 3, **characterized in that** the bypass (5) has a switching valve (12) closing at an applied minimum pressure difference.

5. Heating system according to one of claims 1 to 4, **characterized in that** the rotational speed of the circulation pump (6) is controllable.

## Revendications

1. Installation de chauffage avec une source de chaleur (1), un consommateur (4) et un circuit de chauffage raccordé à la source de chaleur (1) et au consommateur (4) et comportant une pompe de circulation (6), dont le départ (2) et le retour (3) sont reliés entre eux par une dérivation (5), et avec un dispositif de commande (10) pour commander la pompe de circulation (6) en fonction de la température du circuit de chauffage, le circuit de chauffage comportant une vanne (9),
**caractérisée en ce que** la vanne (9) est une vanne de commutation (9) s'ouvrant lorsqu'une différence de pression minimale est appliquée, qui peut être actionnée par une différence de pression à l'aide de la pompe de circulation (6), laquelle différence de pression est supérieure ou inférieure à la différence de pression minimale en fonction de la température du circuit de chauffage.

2. Installation de chauffage selon la revendication 1, **caractérisée en ce que** la vanne de commutation (9) est disposée en amont de la dérivation (5) dans le retour (3) et **en ce que** le dispositif de commande (10) commande la pompe de circulation (6) prévue en aval de la dérivation (5) dans le retour (3) en fonction de la température de retour.

3. Installation de chauffage selon la revendication 1, **caractérisée en ce que** la vanne de commutation (9) est disposée en aval de la dérivation (5) dans le retour (3) et **en ce que** le dispositif de commande (10) commande la pompe de circulation (6) prévue dans la section de circuit de chauffage (8) du côté de la dérivation (5) tourné vers le consommateur (4) en fonction de la température de départ.

4. Installation de chauffage selon l'une des revendications 1 à 3, **caractérisée en ce que** la dérivation (5) comporte une vanne de commutation (12) qui se ferme lorsqu'une différence de pression minimale est appliquée.

5. Installation de chauffage selon l'une des revendications 1 à 4, **caractérisée en ce que** la vitesse de rotation de la pompe de circulation (6) est réglable.
